# EUROPÄISCHE PATENTSCHRIFT

(11) **EP 4 291 492 B1**
(45) Veröffentlichungstag und Bekanntmachung des Hinweises auf die Patenterteilung: **10.12.2025**
(21) Anmeldenummer: 22710295.1
(22) Anmeldetag: 08.02.2022
(51) Int. Cl.: B64G 1/22

(54) **AUSLEGERSYSTEM FÜR EINEN SATELLITEN**
BOOM SYSTEM FOR A SATELLITE
SYSTÈME DE FLÈCHE POUR SATELLITE

(30) Priorität: 09.02.2021 DE 102021102980
(43) Veröffentlichungstag der Anmeldung: 20.12.2023
(73) Patentinhaber: Dcubed GmbH, 82110 Germering (DE)
(72) Erfinder: SINN, Thomas, 82110 Germering (DE); GRUBER, Joram, 82110 Germering (DE); LUND, Thomas, 82110 Germering (DE); TITZ, Alexander, 82110 Germering (DE)
(74) Vertreter: Schott, Jakob Valentin
(86) Internationale Anmeldenummer: PCT/EP2022/052936
(87) Internationale Veröffentlichungsnummer: WO 2022/171588

(56) Entgegenhaltungen:
- CN-U- 209 213 333
- US-A1- 2016 024 790
- US-A1- 2018 111 703
- US-A1- 2020 122 861
- US-B2- 9 593 485

## Beschreibung

Der Einsatz von Satelliten ist heutzutage für eine Vielzahl von Anwendungen verbreitet. Noch bis vor einigen Jahren fanden überwiegend recht große, teure Satelliten, deren Bau Jahrzehnte dauern kann, Verwendung. Als Beispiel hierfür können die Iridium-Satelliten dienen, deren jeweiliger Satellitenhauptkörper eine Länge von etwa vier Metern und einen Durchmesser von über einem Meter aufweist, und die über 650 kg wiegen. Die Kosten eines einzigen Iridium-Satelliten betrugen mehrere 10 Millionen US-Dollar.

Moderne Satelliten wiegen häufig unter 500 kg (wie z.B. die Satelliten des Starklink-Systems der Firma SpaceX^{®} mit einem Gewicht von jeweils ca. 230 kg). Der Trend geht derzeit in Richtung sogenannter Mikro- und Nanosatelliten, wobei Mikrosatelliten zwischen 10 kg und 100 kg, und Nanosatelliten zwischen 1 kg und 10 kg wiegen. Ein bekanntes Beispiel von Nanosatelliten sind die sogenannten "CubeSats". Diese erfüllen ein standardisiertes Maximalgewicht (1,33 kg) und standardisierte Außenabmessungen (10 x 10 x 10 cm). Mikro- und Nanosatelliten können vergleichsweise kostengünstig und schnell gebaut und in eine orbitale Umlaufbahn gebracht werden.

Gerade im Bereich von Nanosatelliten, jedoch auch bei Mikrosatelliten und traditionellen Satelliten, ist es vorteilhaft, möglichst viel Gewicht und Bauraum einzusparen. Dies ermöglicht die Unterbringung einer größeren Anzahl von Satelliten auf einer Trägerrakete, wodurch die Kosten für den Transport ins Weltall pro Satellit signifikant verringert werden können.

In vielen Anwendungen ist es vorteilhaft oder sogar notwendig, ein Funktionselement eines Satelliten von dessen Satellitenhauptkörper beabstandet zu betreiben. Bei einem solchen Funktionselement kann es sich um einen Datenerzeuger wie einen Sensor, beispielsweise einen Temperatur-, Beschleunigungs-, Lage- und/oder Strahlungs-Sensor oder eine Antenne handeln. Als weitere Funktionselemente seien beispielhaft Solarsegel bzw. -paneele und Bremsschirme genannt.

Um ein derartiges Funktionselement in dessen Betriebsposition von dem Satellitenhauptkörper zu beabstanden, kann ein Ausleger eingesetzt werden, welcher mit einem Ende an dem Funktionselement und mit dem anderen Ende an dem Satellitenhauptkörper befestigt ist. Beispielsweise ist der Ausleger als ausfaltbare Leiter- bzw. Rahmenstruktur gebildet, sodass er in einer Vorbereitungsposition des Funktionselements einen geringeren Raum einnimmt als in der Betriebsposition des Funktionselements. Als Beispiel einer großen ausfaltbaren Leiterstruktur kann auf den sogenannten "Folding Articulated Square Truss (FAST)"-Mast verwiesen werden, der momentan auf der Internationalen Raumstation ISS als Stütze von Solarpaneelen eingesetzt wird.

Aus der US 2016/024790 A1 ist eine entfaltbare Struktur mit einer Bandfeder bekannt. Die US 2018/111703 A1 offenbart ein Auslegersystem mit einem aufgewickelt bevorrateten Ausleger. Die US 2020/122861 A1 offenbart eine Vorrichtung, bei der Bandfedern aufgerollt bevorratet werden und nach dem Abrollen eine Auslegerstruktur bilden. Die CN 209 213 333 U offenbart eine roboterarmähnliche Auslegerstruktur für Satelliten.

Vor diesem Hintergrund stellt sich die Aufgabe, ein kostengünstiges, kompaktes und funktional verbessertes Auslegersystem für einen Satelliten bereitzustellen.

Es wird ein Auslegersystem für einen Satelliten bereitgestellt, welches einen Ausleger umfasst, der in einem aufgewickelten Zustand mehrlagig aufgewickelt ist und in einem abgewickelten Zustand abgewickelt ist, wobei der Ausleger dazu eingerichtet ist, in dem abgewickelten Zustand bei Schwerelosigkeit eine vorbestimmte Form anzunehmen. Der Ausleger kann also ausgehend von dem aufgewickelten Zustand abgewickelt bzw. entfaltet werden.

Vorzugsweise ist der Ausleger zumindest im aufgewickelten Zustand, beispielsweise auch im abgewickelten Zustand, im Wesentlichen bandförmig. Der Ausleger kann in dem aufgewickelten Zustand radial mehrlagig aufgewickelt sein. Der Ausleger kann in dem aufgewickelten Zustand mehrlagig in Schneckenform bzw. in Form einer Spirale aufgewickelt sein.

Das Auslegersystem umfasst einen Federspeicher, der eine für ein Abwickeln des Auslegers von dem aufgewickelten Zustand in den abgewickelten Zustand benötigte Kraft bereitstellt. In anderen Worten stellt der Federspeicher die für die Entfaltung des Auslegers benötigte Kraft bereit.

Der Federspeicher ermöglicht es, auf den Einsatz eines Elektromotors zum Abwickeln des Auslegers verzichten zu können, was zumindest die Fehleranfälligkeit, das Gewicht und die Herstellungskosten minimiert.

Der Federspeicher kann eine Biegefeder umfassen, beispielsweise eine Spiralfeder. Die Biege- bzw. Spiralfeder kann aus einem bandförmigen metallischen Material (z.B. Federstahl) gefertigt sein. Beispielsweise ist die Biege- bzw. Spiralfeder rotationsfest an den Ausleger gekoppelt. Hierzu kann die Biege- bzw. Spiralfeder direkt oder über ein Verbindungselement mit dem Ausleger rotations- und/oder zugfest fest verbunden sein.

In einem Beispiel bildet der Ausleger im aufgewickelten Zustand eine entgegen der Spiralfeder verlaufende Spirale.

Beispielsweise verlaufen im aufgewickelten Zustand des Auslegers die Spiralfeder und der aufgewickelte Ausleger im Wesentlichen um dieselbe Achse. Die hierin beschriebenen radialen und axialen Richtungen und Abstände können sich auf diese Achse beziehen.

Beispielsweise haben übereinander verlaufende Lagen des aufgewickelten Auslegers jeweils denselben radialen Abstand. Einzelne Wicklungen der Spiralfeder können voneinander unterschiedlich radial beabstandet sein.

Das Auslegersystem kann einen in Richtung der Achse verlaufenden Lagerzapfen umfassen, wobei ein radial innenliegender Endabschnitt der Biege- bzw. Spiralfeder an dem Lagerzapfen festgelegt oder befestigt ist. Der Lagerzapfen ist beispielsweise gegenüber dem Ausleger und der Biege- bzw. Spiralfeder zumindest während eines Abwickelns des Auslegers rotationsfest. Beispielsweise ist der Lagerzapfen rotationsfest und in axialer Richtung lösbar an einer Montageplatte befestigt. So kann ermöglicht werden, vor einer Montage auf der Montageplatte die Biege- bzw. Spiralfeder durch Drehung des Lagerzapfens aufzuziehen. In anderen Worten ermöglicht eine Drehung des Lagerzapfens gegenüber der Biege- bzw. Spiralfeder ein Aufbauen einer Federspannung in der Biege- bzw. Spiralfeder. Eine gegenläufige Drehung des Lagerzapfens kann durch die Montage auf der Montageplatte verhindert werden, da hierbei der Lagerzapfen gegenüber der Biege- bzw. Spiralfeder rotationsfest befestigt wird.

Die Biege- bzw. Spiralfeder kann im aufgewickelten Zustand des Auslegers gänzlich oder im Wesentlichen vollständig radial innerhalb des aufgewickelten Auslegers angeordnet sein.

Das Auslegersystem kann eine Führungsscheibe umfassen, die normal zu der Achse steht und im aufgewickelten Zustand des Auslegers den Ausleger und/oder die Biege- bzw. Spiralfeder in axialer Draufsicht bedeckt. Die Führungsscheibe kann Teil einer Leerspule sein, wobei der Ausleger im aufgewickelten Zustand auf die Leerspule aufgewickelt ist. Beispielsweise steht die Führungsscheibe im aufgewickelten Zustand des Auslegers unter einer Federvorspannung, die von dem Federspeicher, insbesondere der Biege- bzw. Spiralfeder, bereitgestellt wird.

Das Auslegersystem kann ein Befestigungselement umfassen, welches sowohl an der Führungsscheibe als auch an der Biege- bzw. Spiralfeder befestigt ist. Beispielsweise steht das Befestigungselement im aufgewickelten Zustand des Auslegers unter einer Federvorspannung, die von dem Federspeicher, insbesondere der Biege- bzw. Spiralfeder, bereitgestellt wird.

Der Ausleger, insbesondere ein im aufgewickelten Zustand des Auslegers radial innenliegender (z.B. erster) Endabschnitt des Auslegers, kann an dem Befestigungselement und/oder im Bereich des Befestigungselements an der Biege- bzw. Spiralfeder befestigt sein. Alternativ oder zusätzlich kann der Ausleger bzw. ein im aufgewickelten Zustand des Auslegers radial innenliegender (z.B. erster oder zweiter) Endabschnitt des Auslegers an der Führungsscheibe befestigt sein.

Beispielsweise liegt der Ausleger, bzw. ein im aufgewickelten Zustand des Auslegers radial innenliegender (z.B. erster, zweiter oder dritter) Endabschnitt des Auslegers, zumindest im aufgewickelten Zustand auf dem Befestigungselement radial außen auf. Das Befestigungselement kann also Teil der Leerspule sein. Alternativ oder zusätzlich kann der Ausleger, bzw. ein im aufgewickelten Zustand des Auslegers radial innenliegender (z.B. erster, zweiter, dritter oder vierter) Endabschnitt des Auslegers, zumindest im aufgewickelten Zustand des Auslegers auf einer radial äußersten Wicklung der Spiralfeder aufliegen.

Das Auslegersystem kann ein oder mehrere an der Führungsscheibe befestigte Führungselemente umfassen. Beispielsweise liegt der Ausleger, bzw. ein im aufgewickelten Zustand des Auslegers radial innenliegender (z.B. erster, zweiter, dritter, vierter oder fünfter) Endabschnitt des Auslegers, im aufgewickelten Zustand radial außen auf dem einen bzw. den mehreren Führungselementen auf. Das eine bzw. die mehreren Führungselemente kann bzw. können Teil der Leerspule sein.

In einem Beispiel umfasst das Auslegersystem ein Wälzlager (beispielsweise Rollenlager) oder ein Kugellager, welches eine Rotation der Führungsscheibe um die Achse zulässt. Beispielsweise ist das Wälz- oder Kugellager dazu eingerichtet, eine Translation der Führungsscheibe entlang der Achse (z.B. in einer oder zwei Richtungen) zu begrenzen.

Das Auslegersystem kann eine elektrische Verkabelung umfassen, die sich von einem ersten longitudinalen Ende des Auslegers bis zu einem zweiten longitudinalen Ende des Auslegers erstreckt. Die Verkabelung kann dem Ausleger folgend mit einer maximalen Entfernung von wenigen (z.B. 1, 2.5 oder 5) Zentimetern vom Ausleger verlaufen. Die Verkabelung kann im Wesentlichen auf ihrer gesamten Länge an dem Ausleger befestigt sein. Die Verkabelung kann eine oder mehrere flexible Flachbandkabel (Flat Flexible Cable, FFC) umfassen. An die elektrische Verkabelung, insbesondere an ein Ende der elektrischen Verkabelung, kann ein elektrischer Verbraucher oder ein Datenerzeuger, wie beispielsweise ein Bild-, Temperatur-, Beschleunigungs-, Lage- und/oder Strahlungs-Sensor, eine Digitalkamera oder eine (Sende- und/oder Empfangs-) Antenne, angeschlossen sein. Beispielsweise ist der Datenerzeuger an einem longitudinalen Ende des Auslegers befestigt.

Die Verkabelung kann einen störungsfreien Betrieb eines angeschlossenen Datenerzeugers ermöglichen, wobei deren Befestigung eine Blockade beim Abwickeln des Auslegers verhindern kann. Auch kann die Verkabelung den Betrieb eines kabelgebundenen Datenerzeugers ermöglichen, wodurch keine zusätzlichen Funkmodule im Satelliten verbaut werden müssen. Letztlich werden also auch hierdurch Baugröße, Gewicht und Baukosten eingespart.

Das Auslegersystem kann einen an die elektrische Verkabelung anschließenden und mit dieser elektrisch verbundenen ersten Kabelabschnitt umfassen, der einem spiralförmigen Verlauf der Spiralfeder folgt. Der erste Kabelabschnitt kann eine oder mehrere Flachbandkabel umfassen.

Beispielsweise ist der erste Kabelabschnitt im Wesentlichen auf seiner gesamten Länge an der Spiralfeder befestigt, zum Beispiel auf einer radialen und/oder axialen Oberfläche der Spiralfeder.

Das Auslegersystem kann einen an den ersten Kabelabschnitt anschließenden und mit diesem elektrisch verbundenen zweiten Kabelabschnitt umfassen, der im Bereich eines radial innenliegenden Endes der Spiralfeder in axialer Richtung verläuft. Der zweite Kabelabschnitt kann eine oder mehrere Flachbandkabel umfassen.

Beispielsweise ist der zweite Kabelabschnitt relativ zu dem Lagerzapfen rotationsfest angeordnet. Der zweite Kabelabschnitt kann auf einer Manteloberfläche des Lagerzapfens oder innerhalb des Lagerzapfens angeordnet und/oder befestigt sein.

In einer ersten Variante ist der Ausleger aus einem Verbundwerkstoff gefertigt. Die Verkabelung kann in dieser Variante in den Verbundwerkstoff eingebettet oder auf einer Oberfläche des Auslegers befestigt sein. Der Verbundwerkstoff kann ein Kunststoffverbundwerkstoff sein, beispielsweise ein glasfaser-, carbonfaser- oder naturfaserverstärkter Kunststoff.

In einer zweiten Variante ist der Ausleger aus einem metallischen Material (z.B. Federstahl) gefertigt. Die Verkabelung kann in dieser Variante auf einer Oberfläche des Auslegers befestigt sein. Das metallische Material kann elektrisch geerdet sein, insbesondere in Bezug auf den Datenerzeuger und/oder eine Erdungsleitung der elektrischen Verkabelung.

Erfindungsgemäß umfasst das Auslegersystem eine Digitalkamera, die an einem longitudinalen Ende des Auslegers oder an einem Endabschnitt des Auslegers derart befestigt ist, dass ihre Sichtachse im abgewickelten Zustand des Auslegers im Wesentlichen in Richtung des Auslegers weist. Beispielsweise verläuft die Sichtachse im abgewickelten Zustand des Auslegers parallel zu einem abgewickelten Teil des Auslegers oder ist gegenüber dem abgewickelten Teil des Auslegers mit einem spitzen Winkel verkippt. Der Winkel zwischen der Sichtachse der Digitalkamera und dem abgewickelten Teil des Auslegers bzw. dem Ausleger im abgewickelten Zustand ist beispielsweise kleiner als 90°, vorzugsweise kleiner gleich 45°, insbesondere kleiner gleich 25°, beispielsweise kleiner gleich 10°. Die Sichtachse kann ausgehend von der Digitalkamera über einen oder mehrere Spiegel umgelenkt werden, wobei in diesem Fall der letzte umgelenkte Teil im Wesentlichen in Richtung des Auslegers verläuft. Die Sichtachse liegt zum Beispiel in einer Mitte eines von der Digitalkamera aufgenommenen Bildes.

Die Digitalkamera kann mit der elektrischen Verkabelung elektrisch verbunden sein. Es kann eine Steuereinheit vorgesehen sein, die mit der Digitalkamera über die elektrische Verkabelung verbunden ist. Insbesondere kann die Steuereinheit mit dem zweiten Kabelabschnitt elektrisch verbunden sein, wobei die elektrische Verkabelung mit der Digitalkamera verbunden ist. Die Steuereinheit kann dazu eingerichtet sein, an die Digitalkamera Daten zu senden und/oder von der Digitalkamera Daten wie z.B. Bilddaten zu empfangen. Die Digitalkamera kann über die elektrische Verkabelung mit Strom versorgt werden.

Die Digitalkamera kann ein Bild eines Satelliten aufnehmen, in dem das Auslegersystem verbaut ist. Dies ermöglicht eine optische Überwachung verschiedener Funktionen bzw. Funktionselemente des Satelliten. Für eine Funktionsanalyse muss daher nicht ausschließlich auf rein satelliteninterne Sensordaten (z.B. Zustandssensoren eines für ein Entfalten des Auslegers eingesetzten Motors) zurückgegriffen werden. Die Funktions- und Funktionselementüberwachung kann optimiert, und der Einsatz diverser Zustandssensoren in von der Kamera erfassten Funktionselementen überflüssig gemacht werden. Auch auf diesen Weise können Baugröße, Gewicht und Baukosten eingespart werden.

Der Ausleger kann als bistabiles Element ausgelegt sein, sodass er im aufgewickelten Zustand und im abgewickelten Zustand jeweils eine niedrigere Verformungsenergie aufweist als in jeglichem sonstigen Zustand des Auslegers.

Die vorbestimmte Form des Auslegers kann im Wesentlichen geradlinig und/oder im Wesentlichen tangential zu einer radial äußersten Wicklung der Spiralfeder sein.

Das Auslegersystem kann einen Führungsmechanismus umfassen, der dazu eingerichtet ist, den Ausleger derart zu führen, dass der Ausleger im abgewickelten Zustand die vorbestimmte Form aufweist. Beispielsweise umfasst der Führungsmechanismus zumindest zwei auf unterschiedlichen Seiten des Auslegers positionierte, im Wesentlichen parallel angeordnete Führungswalzen.

Der Führungsmechanismus, insbesondere eine oder beide der Führungswalzen, können dazu eingerichtet sein, bei einem Abwickeln des aufgewickelten Auslegers eine Veränderung der Querschnittsform des Auslegers zu gestatten oder zu bewirken. Beispielsweise weist ein aufgewickelter Teil des Auslegers stets eine im Wesentlichen rechteckige Querschnittsform auf. Ein abgewickelter Teil des Auslegers kann eine gekrümmte und/oder im Wesentlichen U-förmige Querschnittsform aufweisen. Beispielsweise weist der Ausleger eine Querschnittsform auf, die im Wesentlichen der eines Roll-Stahlmaßbands entspricht.

Das Auslegersystem kann ein Verriegelungssystem umfassen, welches in einem verriegelten Zustand ein Abwickeln des aufgewickelten Auslegers blockiert und in einem entriegelten Zustand das Abwickeln des aufgewickelten Auslegers gestattet. Hierzu kann das Verriegelungssystem entriegelbar an die Führungsscheibe gekoppelt sein. Insbesondere kann das Verriegelungssystem einen Blockierpin umfassen, der in dem verriegelten Zustand des Verriegelungssystems bzw. in dem aufgewickelten Zustand des Auslegers mit der Führungsscheibe in Kontakt steht. Das Verriegelungssystem kann einen Aktuator umfassen, der zum Versetzten des Verriegelungssystems aus dem verriegelten in den entriegelten Zustand den Blockierpin von dem Kontakt mit der Führungsscheibe löst. Bei dem Verriegelungssystem kann es sich um einen sogenannten "Pin-Puller" handeln, dessen Pin z.B. dem hier beschriebenen Blockierpin entspricht. Beispielsweise umfasst das Verriegelungssystem das in der am 31. Januar 2020 eingereichten Anmeldung DE 10 2020 000 688.4 beschriebene Aktuatormodul. Der dort beschriebene Freisetzungskörper kann dem oben genannten Blockierpin entsprechen.

Das Auslegersystem kann eine Mehrzahl an Auslegern umfassen, die im aufgewickelten Zustand in abwechselnden Schichten übereinander gewickelt sind. Beispielsweise umfasst das Auslegersystem zusätzlich zu dem oben beschriebenen Ausleger einen zweiten Ausleger, der in einem aufgewickelten Zustand mehrlagig aufgewickelt ist und in einem abgewickelten Zustand abgewickelt ist, wobei der zweite Ausleger dazu eingerichtet ist, in dem abgewickelten Zustand bei Schwerelosigkeit eine zweite vorbestimmte Form anzunehmen, wobei der Ausleger im aufgewickelten Zustand und der zweite Ausleger im aufgewickelten Zustand abwechselnde Lagen bilden. Der zweite Ausleger kann dieselben oder andere Merkmale aufweisen wie der oben beschrieben Ausleger. Vorzugsweise unterscheidet sich die vorbestimmte Form des Auslegers von der vorbestimmten Form des zweiten Auslegers zumindest dahingehend, dass der Ausleger im abgewickelten Zustand in einer anderen Richtung verläuft als der zweite Ausleger. Beispielsweise verlaufen der Ausleger und der zweite Ausleger parallel beabstandet in entgegengesetzte Richtungen. Die Länge der abgewickelten Ausleger kann im Wesentlichen gleich lang sein.

Ferner wird ein Satellit bereitgestellt, der das hierin beschriebene Auslegersystem umfasst. Der Satellit ist beispielsweise ein Mikrosatellit oder ein Nanosatellit.

Der Satellit kann einen Satellitenhauptkörper umfassen, in dem das Auslegersystem angeordnet ist. Beispielsweise erstreckt sich der Ausleger im abgewickelten Zustand von dem Satellitenhauptkörper weg. Die Digitalkamera kann dazu eingerichtet und/oder derart an dem Ausleger befestigt sein, dass sie ein Bild aufnehmen kann, in welchem der Satellitenhauptkörper zumindest teilweise enthalten ist.

In anderen Worten kann ein Satellit bereitgestellt werden mit einem mittels eines Auslegers aus einer Vorbereitungsposition in eine Betriebsposition ausfahrbaren Datenerzeuger, umfassend eine Digitalkamera, wobei der Ausleger einen in der Vorbereitungsposition des Datenerzeugers zu einem Wickel aufgewickelten, flexibel biegsamen Strangkörper aufweist, welcher im Bereich seines wickeläußeren Strangendes mit dem Datenerzeuger verbunden ist, wobei beim Abwickeln des Strangkörpers dessen abgewickelte Strangteile eine unter Weltraumbedingungen (z.B. bei Schwerelosigkeit) stabile im wesentlichen geradlinige Ausrichtung (z.B. die oben beschriebene vorbestimmte Form) einnehmen, wobei dem Strangkörper eine Kraftquelle, umfassend den Federspeicher, zugeordnet ist zur Bereitstellung einer den Wickel für eine Abwicklung des Strangkörpers antreibenden Antriebskraft.

Die Erfindung wird nachfolgend anhand der beigefügten Zeichnungen weiter erläutert. Es stellen dar:
Fig. 1 eine schematische Ansicht eines Auslegersystems;
Fig. 2 ein Schnittbild des Auslegersystems aus Fig. 1;
Fig. 3a eine schematische Ansicht eines Teils des Auslegersystems;
Fig. 3b eine schematische Ansicht eines Teils eines Auslegersystems;
Fig. 4 eine perspektivische Ansicht des Auslegersystems; und
Fig. 5 eine schematische Darstellung eines Satelliten mit dem Auslegersystem.

Im Folgenden bezeichnen dieselben Bezugszeichen, soweit nicht anders erläutert, dieselben strukturellen und funktionelle Merkmale.

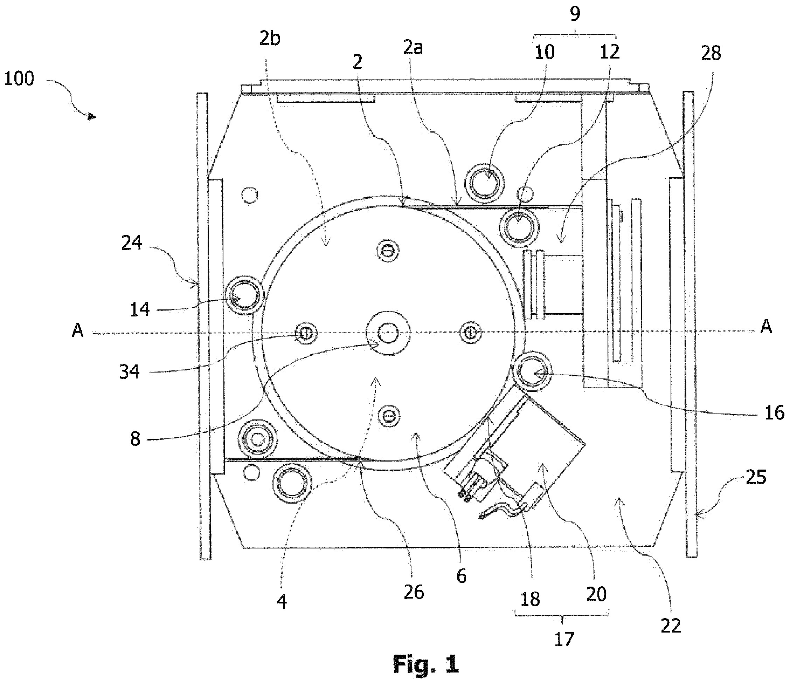

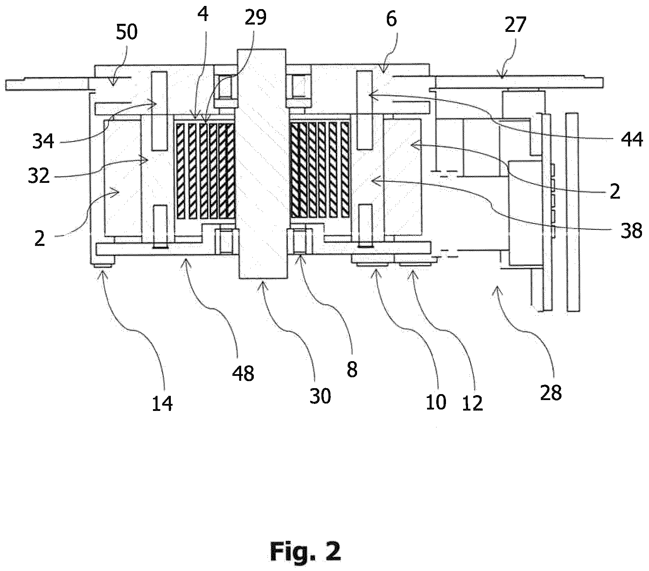

Fig. 1 zeigt eine schematische Darstellung eines Auslegersystems 100 für einen Satelliten, Fig. 2 eine Schnittansicht entlang der Linie A-A in Fig. 1. Das Auslegersystem 100 umfasst einen Ausleger 2, der sich in der Darstellung in diesen beiden Abbildungen in einem aufgewickelten Zustand befindet. In diesem Zustand ist der Ausleger 2 mehrlagig aufgewickelt, während er in einem abgewickelten Zustand abgewickelt ist.

Es versteht sich, dass in dem aufgewickelten Zustand ein außenlagiger bzw. radial äußerster Endabschnitt 2a des Auslegers 2 geradlinig verlaufen kann. In anderen Worten ist der radial äußerste Endabschnitt 2a des Auslegers im aufgewickelten Zustand des Auslegers beispielsweise nicht Teil des durch den aufgewickelten Hauptteil des Auslegers 2 gebildeten Wickels (nicht sichtbar in Fig. 1). Man kann sagen, dass der Ausleger 2 im aufgewickelten Zustand überwiegend (z.B. zu mehr als 75%, vorzugsweise zu mehr als 80% oder sogar zu mehr als 90% der Gesamtlänge des Auslegers 2) aufgewickelt ist. Ähnliches gilt für den abgewickelten Zustand, in dem ein innenlagiger bzw. radial innerster Endabschnitt 2b (nicht sichtbar in Fig. 1) des Auslegers 2 kreis- oder spiralförmig verlaufen kann. Man kann sagen, dass der Ausleger 2 im abgewickelten Zustand überwiegend (z.B. zu mehr als 75%, vorzugsweise zu mehr als 80% oder sogar zu mehr als 90% der Gesamtlänge des Auslegers 2) abgewickelt ist.

Das Auslegersystem 100 umfasst einen Federspeicher 4, der eine für ein Abwickeln des Auslegers 2 von dem aufgewickelten Zustand in den abgewickelten Zustand benötigte Kraft bereitstellt. Wie in Fig. 1 zu erkennen ist, umfasst das Auslegersystem eine Führungsscheibe 6, die einen aufgewickelten Teil des Auslegers 2 und den Federspeicher 4 in axialer Draufsicht bedeckt.

Die Führungsscheibe 6 wird von einem Wälzlager (beispielsweise Rollenlager) 8 gelagert. Das Wälzlager 8 begrenzt ferner eine Translation der Führungsscheibe entlang der Rotationsachse. Anstelle des Wälzlagers 8 kann auch ein Kugellager vorgesehen sein.

Der Ausleger 2 ist dazu eingerichtet, in dem abgewickelten Zustand bei Weltraumbedingungen (z.B. bei Luftleere und Schwerelosigkeit), eine vorbestimmte Form anzunehmen. Die vorbestimmte Form ist insbesondere bei Schwerelosigkeit formstabil und verläuft im Wesentlichen geradlinig.

Das Auslegersystem 100 umfasst einen Führungsmechanismus 9, der dazu eingerichtet ist, den Ausleger 2 derart zu führen, dass der Ausleger 2 im abgewickelten Zustand die vorbestimmte Form einnimmt. Der Führungsmechanismus 9 umfasst zwei auf unterschiedlichen Seiten des Auslegers 2 positionierte, im Wesentlichen parallel angeordnete drehbare Führungswalzen 10, 12. Es sind weitere Lagerwalzen 14, 16 vorgesehen, die einen aufgewickelten Teil des Auslegers 2 in radialer Richtung lagern.

Eine oder beide der Führungswalzen 10, 12 sind dazu eingerichtet, bei einem Abwickeln des aufgewickelten Auslegers 2 eine Veränderung der Querschnittsform des Auslegers 2 zu gestatten oder zu bewirken. Während ein aufgewickelter Teil des Auslegers 2 stets eine im Wesentlichen rechteckige Querschnittsform aufweist, weist ein abgewickelter Teil des Auslegers 2 eine gekrümmte und/oder im Wesentlichen U-förmige Querschnittsform auf. Ferner ist der Ausleger 2 als bistabiles Element ausgelegt, sodass er im aufgewickelten Zustand und im abgewickelten Zustand jeweils eine niedrigere Verformungsenergie aufweist als in jeglichem sonstigen Zustand des Auslegers. Insofern lässt sich der Ausleger 2 mit einem Roll-Stahlmaßband vergleichen.

Das Auslegersystem 100 umfasst ein Verriegelungssystem 17, welches in einem verriegelten Zustand des Verriegelungssystems 17 und dem zeitgleich vorliegenden aufgewickelten Zustand des Auslegers 2 ein Abwickeln des aufgewickelten Auslegers 2 blockiert, und in einem entriegelten Zustand des Verriegelungssystems 17 das Abwickeln des aufgewickelten Auslegers 2 gestattet. Hierzu ist das Verriegelungssystem 17 entriegelbar an die Führungsscheibe 6 gekoppelt. Insbesondere umfasst das Verriegelungssystem 17 einen Blockierpin 18, der im verriegelten Zustand des Verriegelungssystems 17 mit der Führungsscheibe 6 in Kontakt steht und eine Rotation der Führungsscheibe 6 blockiert. Der Blockierpin 18 kann von einem Aktuator 20 des Verriegelungssystems 17 eingezogen werden, wodurch die Führungsscheibe 6 freigegeben und deren Rotation ermöglicht wird.

Das Verriegelungssystem 17 ist auf einer Montageplatte 22 befestigt. Auch die Führungswalzen 10, 12 und die Lagerwalzen 14, 16 sind auf der Montageplatte 22 angeordnet. In Fig. 1 sind ferner zwei Gehäusewände 24, 25 angedeutet, welche den aufgewickelten Ausleger einhausen. Die Gehäusewände 24, 25 können Außenwände eines Satelliten sein und sind in Fig. 2 der Einfachheit halber nicht dargestellt. In Fig. 2 ist ferner ein Gehäusedeckel 27 dargestellt, der parallel und axial beabstandet zu der Montageplatte 22 verläuft.

In der dargestellten Ausführungsform umfasst das Auslegersystem 100 eine Mehrzahl an Auslegern 2, 26. Diese sind im aufgewickelten Zustand in abwechselnden Schichten übereinander gewickelt. In anderen Worten umfasst das in Fig. 1 dargestellte Auslegersystem 100 zusätzlich zu dem oben beschriebenen Ausleger 2 einen zweiten Ausleger 26, der in einem aufgewickelten Zustand mehrlagig aufgewickelt ist und in einem abgewickelten Zustand abgewickelt ist, wobei der zweite Ausleger 26 dazu eingerichtet ist, in dem abgewickelten Zustand bei Schwerelosigkeit eine zweite vorbestimmte Form anzunehmen, wobei der Ausleger 2 im aufgewickelten Zustand und der zweite Ausleger 26 im aufgewickelten Zustand abwechselnde Lagen bilden. Der zweite Ausleger 26 kann dieselben Merkmale aufweisen wie der Ausleger 2. Der Ausleger 2 verläuft im abgewickelten Zustand parallel beabstandet in entgegengesetzter Richtung zu dem zweiten Ausleger 26.

Wie in Fig. 1 gezeigt, umfasst das Auslegersystem 100 eine Digitalkamera 28. Diese ist an dem wickeläußeren Endabschnitt 2a des Auslegers 2 befestigt und weist mit ihrem Objektiv in Richtung des aufgewickelten Auslegers 2 bzw. in Richtung der Rotationsachse der Führungsscheibe 6.

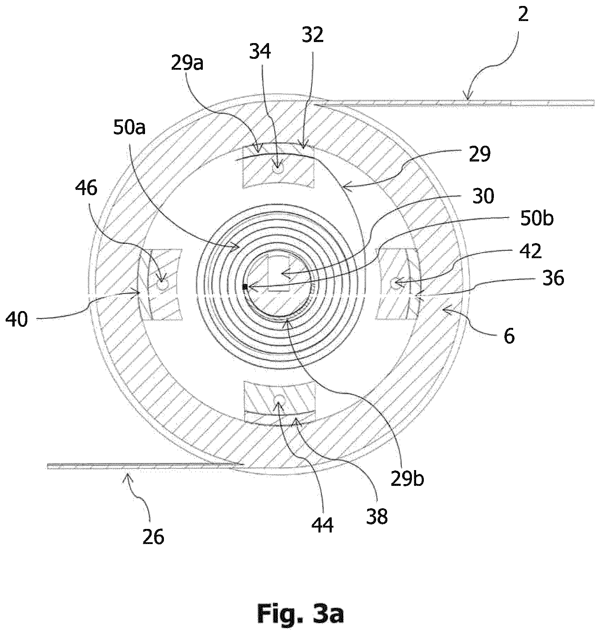

Fig. 3a zeigt einen Teil des Systems aus den Fig. 1 und 2, allerdings ist hierbei ein mittlerer Teil der Führungsscheibe 6 transparent dargestellt. So lässt sich in dieser Ansicht der Federspeicher 4 besser erkennen.

Der Federspeicher 4 umfasst eine Spiralfeder 29, welche aus bandförmigem Federstahl gefertigt ist. Der Ausleger 2 bildet im aufgewickelten Zustand eine entgegen der Spiralfeder 29 verlaufende Spirale, wobei die Spiralfeder 29 und der aufgewickelte Ausleger 2 um die Rotationsachse der Führungsscheibe 6 verlaufen. Die Spiralfeder 29 ist im aufgewickelten Zustand des Auslegers gänzlich radial innerhalb des aufgewickelten Auslegers 2 angeordnet. Das Auslegersystem 100 umfasst einen in Richtung der Rotationsachse der Führungsscheibe 6 verlaufenden Lagerzapfen 30, wobei ein radial innenliegender Endabschnitt 29b der Spiralfeder 29 an dem Lagerzapfen 30 befestigt ist.

Der Lagerzapfen 30 ist auf der Montageplatte 22 rotationsfest befestigt. Vor einer Montage des Lagerzapfens 30 und der Spiralfeder 29 auf der Montageplatte 22 kann die Spiralfeder 29 durch Drehung des Lagerzapfens unter mechanische Spannung gesetzt bzw. aufgezogen werden (in Fig. 3a entgegen dem Uhrzeigersinn). Nach dem Aufziehen kann der Lagerzapfen 30 durch die Montage auf der Montageplatte 22 an einer entgegengesetzten Drehung gehindert werden. Ein radial äußerer Endabschnitt 29a der Spiralfeder 29 ist mit der Führungsscheibe 6 gekoppelt, sodass die Führungsscheibe 6 im aufgewickelten Zustand des Auslegers 2 bzw. nach dem Aufziehen der Spiralfeder 29 unter einer Federvorspannung steht. Allerdings wird die Führungsscheibe 6 durch das Verriegelungssystem 17 daran gehindert, von der Spiralfeder 29 getrieben (in Fig. 3a im Uhrzeigersinn) zu rotieren. Erst wenn das Verriegelungssystem 17 entriegelt wird, kann die Führungsscheibe 6 unter Wirkung der Federkraft der Spiralfeder 29 rotieren. Der im aufgewickelten Zustand des Auslegers 2 radial innenliegende Endabschnitt 2b des Auslegers 2 ist mit der Führungsscheibe 6 kraftübertragend gekoppelt. Bei der federgetriebenen Rotation der Führungsscheibe 6 wird daher der Ausleger 2 abgewickelt.

In der dargestellten Ausführungsform umfasst das Auslegersystem 100 ein Befestigungselement 32, welches sowohl an der Führungsscheibe 6 als auch an dem radial außenliegenden Endabschnitt 29a der Spiralfeder 29 befestigt ist. Zur Befestigung des Befestigungselements 32 an der Führungsscheibe 6 ist ein Bolzen 34 vorgesehen. Auch das Befestigungselement 32 steht im aufgewickelten Zustand des Auslegers 2 bzw. nach dem Aufziehen der Spiralfeder 29 unter der Federvorspannung. Der radial innenliegende Endabschnitt 2a des Auslegers 2 ist an dem Befestigungselement 32 befestigt oder im Bereich des Befestigungselements 32 an der Spiralfeder 29 befestigt.

Das Auslegersystem 100 umfasst mehrere Führungselemente 36, 38, 40, die jeweils mit Bolzen 42, 44, 46 an der Führungsscheibe 6 befestigt sind. Die Führungselemente 36, 38, 40 können konstruktiv identisch zu dem Befestigungselement 32 sein. Beispielsweise liegt der Ausleger 2, bzw. der im aufgewickelten Zustand des Auslegers 2 radial innenliegende Endabschnitt 2a des Auslegers 2, im aufgewickelten Zustand radial außen auf den Führungselementen 36, 38, 40 auf.

Die Führungselemente 36, 38, 40 und das Befestigungselement 32 dienen als Abstandshalter zwischen der Führungsscheibe 6 und einer von dieser axial beabstandeten und zu dieser parallelen Führungsscheibe 48. Ein aufgewickelter Teil des Auslegers 2 und die Spiralfeder 29 werden in axialer Richtung von der Führungsscheibe 6 und der Führungsscheibe 48 eingehaust bzw. geführt. Die Führungselemente 42, 44, 46, das Befestigungselement 32, die Führungsscheibe 6 und die Führungsscheibe 48 bilden eine Leerspule, wobei der Ausleger 2 im aufgewickelten Zustand um die Führungselemente 42, 44, 46 und das Befestigungselement 32 der Leerspule gewickelt ist und die Leerspule in axialer Richtung von den Führungsscheiben 6, 48 begrenzt ist.

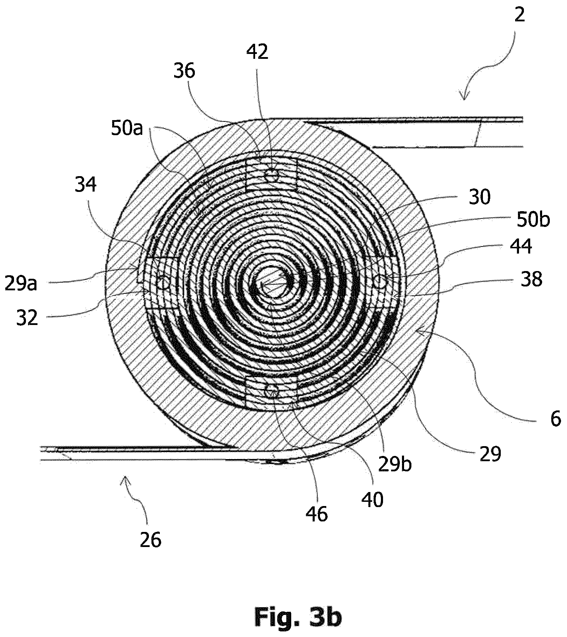

Fig. 3b zeigt eine schematische Ansicht eines Teils eines Auslegersystems. Das gezeigte Auslegersystem entspricht beispielsweise dem Auslegersystem 100.

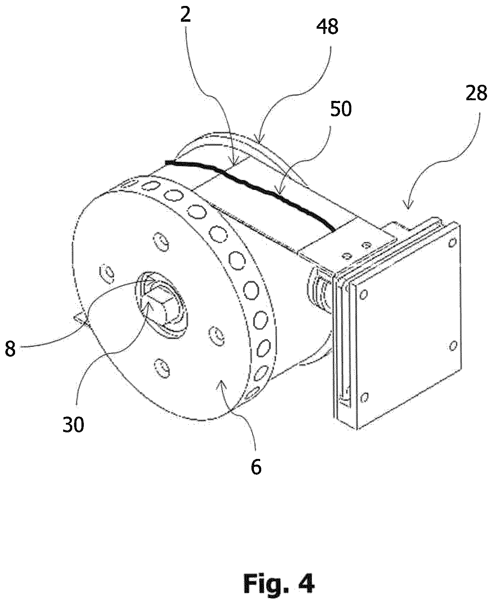

Fig. 4 zeigt eine perspektivische Ansicht eines Teils des Auslegersystems 100. Wie in Fig. 4 angedeutet ist, umfasst das Auslegersystem eine elektrische Verkabelung 50, die sich von einem ersten longitudinalen Ende des Auslegers 2 bis zu einem zweiten longitudinalen Ende des Auslegers 2 erstreckt, und die im Wesentlichen auf ihrer gesamten Länge an dem Ausleger 2 befestigt ist. Die Verkabelung 50 ist als flexibles Flachbandkabel ausgebildet und mit der Digitalkamera 28 elektrisch verbunden. Die Verkabelung 50 ist dazu eingerichtet, die Digitalkamera 28 mit Strom zu versorgen und Daten an die Digitalkamera 28 zu senden und von dieser zu empfangen.

Das Auslegersystem 100 umfasst einen an die elektrische Verkabelung 50 anschließenden und mit dieser elektrisch verbundenen ersten Kabelabschnitt 50a, der einem spiralförmigen Verlauf der Spiralfeder 29 folgt. Der erste Kabelabschnitt 50a ist als flexibles Flachkabel ausgebildet und im Wesentlichen auf seiner gesamten Länge an einer radialen Oberfläche der Spiralfeder 29 befestigt (vgl. Fig. 3a). Die Länge des ersten Kabelabschnitts 50a entspricht somit im Wesentlichen der Länge der Spiralfeder 29. Die Länge der Spiralfeder 29 ist im Wesentlichen konstant. In anderen Worten unterscheidet sich die Länge der Spiralfeder 29 im abgewickelten Zustand des Auslegers 2 nicht wesentlich von deren Länge im aufgewickelten Zustand des Auslegers 2. Durch die genannte Anordnung des ersten Kabelabschnitts 50a kann somit sichergestellt werden, dass beim Abwickeln oder Aufwickeln des Auslegers 2 keine mechanischen Spannungen oder Stauchungen in dem ersten Kabelabschnitt 50a entstehen.

Das Auslegersystem 100 umfasst einen an den ersten Kabelabschnitt 50a anschließenden und mit diesem elektrisch verbundenen zweiten Kabelabschnitt 50b, der im Bereich eines radial innenliegenden Endes der Spiralfeder 29 bzw. im Bereich oder am Ende des Endabschnitts 29b in axialer Richtung verläuft. Auch der zweite Kabelabschnitt 50b ist als Flachbandkabel ausgebildet. Der zweite Kabelabschnitt ist entweder auf einer Manteloberfläche des Lagerzapfens 30 oder innerhalb des Lagerzapfens 30 angeordnet. Insbesondere ist der zweite Kabelabschnitt 50b gegenüber dem Lagerzapfen 30 rotationsfest angeordnet, beispielsweise an diesem und/oder an der Montageplatte 22 befestigt. So ist der zweite Kabelabschnitt 50b gegenüber der Lagerplatte 22 unbeweglich, obwohl sich die Verkabelung 50 und der erste Kabelabschnitt 50a gegenüber der Lagerplatte 22 bewegen, wenn der Ausleger abgewickelt oder aufgewickelt wird. In anderen Worten stellt der zweite Kabelabschnitt 50a einen gegenüber dem Lagerzapfen 30 und/oder der Montageplatte unbeweglichen elektrischen Anschlusspunkt für den ersten Kabelabschnitt 50a dar.

Der erste und zweite Kabelabschnitt 50a, 50b ermöglichen es, die auf dem Ausleger 2 angebrachte Verkabelung 50 ohne den Einsatz von Schleifkontakten elektrisch zu kontaktieren.

Der Ausleger 2 ist in dieser Ausführungsform aus Federstahl gefertigt, und die Verkabelung 50 ist auf einer Oberfläche des Auslegers befestigt. Der Federstahl ist elektrisch geerdet, wodurch von dem Ausleger 2 ausgehende elektrische Störsignale minimiert werden.

Alternativ könnte der Ausleger 2 im Wesentlichen aus einem Faserverbundwerkstoff bestehen. In diesem Fall wäre es denkbar, die Verkabelung 50 in den Faserverbundwerkstoff einzubetten.

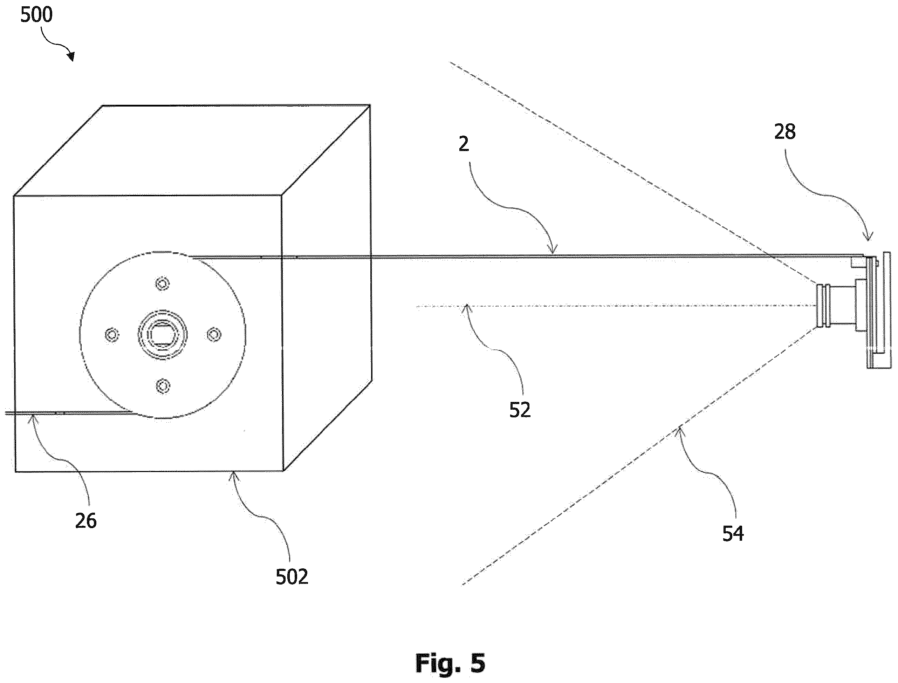

Fig. 5 zeigt einen Satellit 500 mit einem Satellitenhauptkörper 502 und dem darin angeordneten Auslegersystem 100. Wie in Fig. 5 dargestellt, ist die vorbestimmte Form des abgewickelten Auslegers im Wesentlichen geradlinig und tangential zu einer radial äußersten Wicklung der Spiralfeder 29 bzw. zu dem Endabschnitt 29a der Spiralfeder 29. Der Ausleger 2 erstreckt sich im dargestellten abgewickelten Zustand von dem Satellitenhauptkörper 502 weg. Eine Sichtachse 52 der Digitalkamera 28 verläuft parallel zu dem abgewickelten Teil des Auslegers 2. Ein Sichtbereich 54 der Digitalkamera 28 umfasst den Satellitenhauptkörper 502 des Satelliten 500. So kann die Digitalkamera ein Bild erfassen, auf dem der Satellitenhauptkörper zumindest teilweise, vorzugsweise vollständig, abgebildet ist.

Der hierin beschriebene federkraftgetriebene Ansatz ermöglicht es, zum Ausfahren des Auslegers auf einen Elektromotor zu verzichten. Hierdurch können Gewicht, Baugröße und Kosten eingespart werden.

Die Verkabelung ermöglicht den Einsatz des Auslegersystems auch für kabelgebundene Datenerzeuger und vergrößert damit dessen Einsatzbereich. Je nach Ausführung der Verkabelung kann gänzlich auf Schleifkontakte verzichtet werden, die üblicherweise benötigt werden, um ein rotierendes Element elektrisch zu kontaktieren. Die Verkabelung ermöglicht eine störungsarme, kostengünstige und kompakte elektrische Kontaktierung eines von einem Satelliten beabstandeten Datenerzeugers zu geringen Kosten, mit minimalem Gewicht und minimaler Baugröße.

Durch den Einsatz einer rückwärtsgewandten Digitalkamera als Datenerzeuger wird eine Bildaufnahme von dem Satellitenhauptkörper ermöglicht. So können scharfe Bilder des im Orbit befindlichen Satelliten aufgenommen und diverse Funktionen oder Funktionselemente des Satelliten visuell überwacht werden. Hierdurch kann die Betriebssicherheit des Satelliten verbessert werden. Ansonsten zur Funktionsüberwachung benötigte Sensoren können eingespart werden, was wiederum Baugröße, Gewicht und Kosten einspart.

Merkmale der hierin beschriebenen beispielhaften Ausgestaltungen, Ausführungsformen und Beispiele können miteinander kombiniert werden. Auch versteht sich, dass das Auslegersystem keineswegs sämtliche der oben unter Bezugnahme auf die Figuren aufgeführten Merkmale aufweisen muss.

## Patentansprüche

1. Auslegersystem (100) für einen Satelliten (500), umfassend:
einen Ausleger (2), der in einem aufgewickelten Zustand mehrlagig aufgewickelt ist und in einem abgewickelten Zustand abgewickelt ist,
wobei der Ausleger (2) dazu eingerichtet ist, in dem abgewickelten Zustand bei Schwerelosigkeit eine vorbestimmte Form anzunehmen,
wobei das Auslegersystem (100) einen Federspeicher (4) umfasst, der eine für ein Abwickeln des Auslegers (2) von dem aufgewickelten Zustand in den abgewickelten Zustand benötigte Kraft bereitstellt,
**dadurch gekennzeichnet, dass** das Auslegersystem (100) ferner eine Digitalkamera (28) umfasst, die an einem longitudinalen Ende des Auslegers (2) oder an einem Endabschnitt des Auslegers (2) derart befestigt ist, dass ihre Sichtachse (52) im abgewickelten Zustand des Auslegers (2) im Wesentlichen in Richtung des Auslegers (2) weist.

2. Auslegersystem (100) nach Anspruch 1, wobei der Federspeicher (4) eine Spiralfeder (29) umfasst.

3. Auslegersystem (100) nach Anspruch 2, wobei die Spiralfeder (29) im aufgewickelten Zustand des Auslegers (2) radial innerhalb des aufgewickelten Auslegers (2) angeordnet ist.

4. Auslegersystem (100) nach Anspruch 3, ferner umfassend eine Leerspule (6, 32, 36, 38, 40, 48), wobei der Ausleger (2) im aufgewickelten Zustand auf die Leerspule gewickelt ist, wobei die Spiralfeder radial oder/und axial innerhalb der Leerspule angeordnet ist.

5. Auslegersystem (100) nach Anspruch 4, ferner umfassend einen zumindest während eines Abwickelns des Auslegers (2) rotationsfesten Lagerzapfen (30), wobei ein radial innenliegender Endabschnitt (29b) der Spiralfeder (29) an dem Lagerzapfen (30) festgelegt ist.

6. Auslegersystem (100) nach Anspruch 5, wobei im aufgewickelten Zustand des Auslegers (2) die Spiralfeder (29) und der aufgewickelte Ausleger (2) im Wesentlichen um dieselbe Achse verlaufen, wobei der Lagerzapfen (30) in Richtung der Achse verläuft.

7. Auslegersystem (100) nach Anspruch 5 oder 6, wobei der Lagerzapfen in axialer Richtung lösbar an einer Montageplatte (22) befestigt ist, sodass vor einer Montage auf der Montageplatte (22) die Spiralfeder (29) durch Drehung des Lagerzapfens aufgezogen werden kann.

8. Auslegersystem (100) nach einem der Ansprüche 2 bis 7, wobei der Ausleger (2) im aufgewickelten Zustand eine entgegen der Spiralfeder (29) verlaufende Spirale bildet.

9. Auslegersystem (100) nach einem der Ansprüche 1 bis 8, wobei der Ausleger (2) als bistabiles Element ausgelegt ist.

10. Auslegersystem (100) nach einem der Ansprüche 1 bis 9, ferner umfassend:
eine elektrische Verkabelung (50), die sich von einem ersten longitudinalen Ende des Auslegers (2) bis zu einem zweiten longitudinalen Ende des Auslegers (2) erstreckt, wobei die Digitalkamera (28) mit der elektrischen Verkabelung (50) elektrisch verbunden ist.

11. Auslegersystem (100) nach Anspruch 10, wobei die elektrische Verkabelung (50) ein oder mehrere flexible Flachbandkabel umfasst.

12. Auslegersystem (100) nach einem der Ansprüche 1 bis 11, wobei die Sichtachse (52) im abgewickelten Zustand des Auslegers (2) parallel zu einem abgewickelten Teil des Auslegers (2) ist.

13. Auslegersystem (100) nach einem der Ansprüche 1 bis 11, wobei die Sichtachse (52) gegenüber dem abgewickelten Teil des Auslegers (2) mit einem spitzen Winkel verkippt ist.

14. Satellit (500), umfassend das Auslegersystem (100) nach einem der Ansprüche 1 bis 13.

15. Satellit (500) nach Anspruch 14, ferner umfassend:
einen Satellitenhauptkörper (502), in dem das Auslegersystem (100) angeordnet ist,
wobei sich der Ausleger (2) im abgewickelten Zustand von dem Satellitenhauptkörper (502) weg erstreckt,
wobei die Digitalkamera (28) dazu eingerichtet und derart an dem Ausleger (2) befestigt ist, dass sie ein Bild aufnehmen kann, in welchem der Satellitenhauptkörper (502) zumindest teilweise enthalten ist.

## Claims

1. Boom system (100) for a satellite (500), comprising:
a boom (2) which in a furled state is furled in multiple layers and in an unfurled state is unfurled,
wherein the boom (2) is adapted to assume a predetermined shape in the unfurled state in zero gravity,
wherein the boom system (100) comprises a spring energy store (4) which provides a force necessary to unfurl the boom (2) from the furled state into the unfurled state,
**characterised in that** the boom system (100) further comprises a digital camera (28) which is fastened to a longitudinal end of the boom (2) or to an end portion of the boom (2) in such a manner that its viewing axis (52) points substantially in the direction of the boom (2) in the unfurled state of the boom (2).

2. Boom system (100) according to claim 1, wherein the spring energy store (4) comprises a spiral spring (29).

3. Boom system (100) according to claim 2, wherein the spiral spring (29), in the furled state of the boom (2), is arranged radially inside the furled boom (2).

4. Boom system (100) according to claim 3, further comprising an empty reel (6, 32, 36, 38, 40, 48), wherein the boom (2) is furled onto the empty reel in the furled state, wherein the spiral spring is arranged radially or/and axially inside the empty reel.

5. Boom system (100) according to claim 4, further comprising a bearing pin (30) which is fixed against rotation at least during unfurling of the boom (2), wherein a radially inner end portion (29b) of the spiral spring (29) is fixed to the bearing pin (30).

6. Boom system (100) according to claim 5, wherein, in the furled state of the boom (2), the spiral spring (29) and the furled boom (2) run substantially around the same axis, wherein the bearing pin (30) runs in the direction of the axis.

7. Boom system (100) according to claim 5 or 6, wherein the bearing pin is fastened to a mounting plate (22) so as to be releasable in the axial direction, so that, before mounting on the mounting plate (22), the spiral spring (29) can be wound by rotation of the bearing pin.

8. Boom system (100) according to any one of claims 2 to 7, wherein the boom (2) in the furled state forms a spiral running in the opposite direction to the spiral spring (29).

9. Boom system (100) according to any one of claims 1 to 8, wherein the boom (2) is designed as a bistable element.

10. Boom system (100) according to any one of claims 1 to 9, further comprising:
electrical cabling (50) which extends from a first longitudinal end of the boom (2) to a second longitudinal end of the boom (2), wherein the digital camera (28) is electrically connected to the electrical cabling (50).

11. Boom system (100) according to claim 10, wherein the electrical cabling (50) comprises one or more flexible ribbon cables.

12. Boom system (100) according to any one of claims 1 to 11, wherein, in the unfurled state of the boom (2), the viewing axis (52) is parallel to an unfurled part of the boom (2).

13. Boom system (100) according to any one of claims 1 to 11, wherein the viewing axis (52) is tilted at an acute angle relative to the unfurled part of the boom (2).

14. Satellite (500) comprising the boom system (100) according to any one of claims 1 to 13.

15. Satellite (500) according to claim 14, further comprising:
a satellite main body (502) in which the boom system (100) is arranged,
wherein the boom (2) in the unfurled state extends away from the satellite main body (502),
wherein the digital camera (28) is adapted and fastened to the boom (2) in such a manner that it is able to record an image in which the satellite main body (502) is contained at least in part.

## Revendications

1. Système de flèche (100) pour un satellite (500), comprenant:
une flèche (2) qui est enroulée en plusieurs spires lorsqu'elle est enroulée et qui est déroulée lorsqu'elle est déroulée,
dans lequel la flèche (2) est conçue de manière à prendre une forme prédéterminée lorsqu'elle est déroulée en apesanteur,
le système de flèche (100) comprenant un ressort accumulateur (4) qui fournit la force nécessaire pour que la flèche (2) puisse passer de l'état enroulé à l'état déroulé,
**caractérisé en ce que** le système de flèche (100) comprend en outre une caméra numérique (28) qui est fixée à une extrémité longitudinale de la flèche (2) ou à une partie d'extrémité de la flèche (2) de telle sorte que son axe de vue (52) soit orienté sensiblement dans la direction de la flèche (2) lorsque la flèche (2) est déroulée.

2. Système de flèche (100) selon la revendication 1, dans lequel le ressort accumulateur (4) comprend un ressort en spirale (29).

3. Système de flèche (100) selon la revendication 2, dans lequel le ressort en spirale (29) est disposé radialement à l'intérieur de la flèche (2) enroulée lorsque la flèche (2) est enroulée.

4. Système de flèche (100) selon la revendication 3, comprenant en outre une bobine vide (6, 32, 36, 38, 40, 48), dans lequel la flèche (2) est enroulée sur la bobine vide lorsqu'elle est enroulée, dans lequel le ressort en spirale est disposé radialement ou/et axialement à l'intérieur de la bobine vide.

5. Système de flèche (100) selon la revendication 4, comprenant en outre un tourillon (30) bloqué en rotation au moins pendant le déroulement de la flèche (2), dans lequel une section d'extrémité interne (29b) du ressort spiral (29) perpendiculaire à l'axe étant fixée au tourillon (30).

6. Système de flèche (100) selon la revendication 5, dans lequel, lorsque la flèche (2) est enroulée, le ressort en spirale (29) et la flèche (2) enroulée se situent sensiblement autour du même axe, le tourillon (30) s'étendant dans la direction de l'axe.

7. Système de flèche (100) selon la revendication 5 ou 6, dans lequel le tourillon est fixé de manière amovible dans la direction axiale sur une plaque de montage (22), de sorte que, avant qu'il ne soit monté sur la plaque de montage (22), le ressort spiral (29) puisse être tendu par rotation du tourillon.

8. Système de flèche (100) selon l'une quelconque des revendications 2 à 7, dans lequel, lorsqu'elle est enroulée, la flèche (2) forme une spirale à l'encontre du ressort en spirale (29).

9. Système de flèche (100) selon l'une quelconque des revendications 1 à 8, dans lequel la flèche (2) est conçue comme un élément bistable.

10. Système de flèche (100) selon l'une quelconque des revendications 1 à 9, comprenant en outre:
un câblage électrique (50) partant d'une première extrémité longitudinale de la flèche (2) à une seconde extrémité longitudinale de la flèche (2), dans lequel la caméra numérique (28) est connectée électriquement au câblage électrique (50).

11. Système de flèche (100) selon la revendication 10, dans lequel le câblage électrique (50) comprend un ou plusieurs câbles rubans flexibles.

12. Système de flèche (100) selon l'une quelconque des revendications 1 à 11, dans lequel l'axe de vue (52) est parallèle à une partie déroulée de la flèche (2) lorsque la flèche (2) est déroulée.

13. Système de flèche (100) selon l'une quelconque des revendications 1 à 11, dans lequel l'axe de vue (52) est incliné avec un angle aigu par rapport à la partie déroulée de la flèche (2).

14. Satellite (500) comprenant le système de flèche (100) selon l'une quelconque des revendications 1 à 13.

15. Satellite (500) selon la revendication 14, comprenant en outre:
un corps principal de satellite (502) dans lequel est disposé le système de flèche (100),
la flèche (2) s'écartant du corps principal de satellite (502) lorsqu'elle est déroulée,
dans lequel la caméra numérique (28) est conçue et fixée à la flèche (2) de telle sorte qu'elle puisse prendre une image qui contient, au moins en partie, le corps principal de satellite (502).
